# EUROPEAN PATENT APPLICATION

(11) **EP 4 125 062 A1**
(43) Date of publication of application: **01.02.2023**
(21) Application number: 22185356.7
(22) Date of filing: 18.07.2022
(51) Int. Cl.: G06V 20/56, G06V 10/46

(54) **VEHICLE POSITIONING METHOD AND APPARATUS, ELECTRONIC DEVICE, NON-TRANSITORY COMPUTER-READABLE STORAGE MEDIUM AND COMPUTER PROGRAM PRODUCT**

(30) Priority: 28.07.2021 CN 202110858360
(71) Applicant: Beijing Baidu Netcom Science and Technology Co., Ltd., Haidian, Anhui 100085 (CN)
(72) Inventor: CHEN, Shuyi, Haidian, BEIJING, 100085 (CN)
(74) Representative: Pennacchio, Salvatore Giovanni

(57) **Abstract**

Provided are a vehicle positioning method and apparatus, an electronic device, a non-transitory computer-readable storage medium and a computer program product. A specific implementation scheme is as follows: acquiring an image of surroundings of a vehicle; performing feature extraction on the image to obtain at least one keypoint in the image and acquiring a visual feature descriptor corresponding to each keypoint of the at least one keypoint; performing element recognition on the image to obtain at least one natural positioning element in the image and acquiring identification information corresponding to each natural positioning element of the at least one natural positioning element; and positioning the vehicle based on the visual feature descriptor corresponding to each keypoint and the identification information corresponding to each natural positioning element.

## Description

### TECHNICAL FIELD

The present disclosure relates to the technical field of artificial intelligence and, further, to autonomous driving technology and, in particular, to a vehicle positioning method and apparatus, an electronic device, a non-transitory computer-readable storage medium and a computer program product.

### BACKGROUND

With the development of science and technology, especially the development of automobile manufacturing and information technology, autonomous driving technology has become a research hotspot in recent years. An autonomous driving system typically contains modules such as self-positioning, environmental perception, decision and planning and motion control. Self-positioning technology is a basis for all autonomous driving systems. Therefore, how to position a vehicle accurately to ensure the safety of the vehicle and pedestrians becomes an urgent problem to be solved.

At present, a feature point detection algorithm is a visual front-end algorithm for mapping and positioning in the autonomous driving system. In a mapping and positioning process, the autonomous driving system acquires feature points from an image sequence frame, then matches the feature points with a map, and obtains a pose of a camera through positioning back-end optimization, thereby positioning the vehicle.

### SUMMARY

The present disclosure provides a vehicle positioning method and apparatus, an electronic device, a non-transitory computer-readable storage medium and a computer program product.

In a first aspect, the present disclosure provides a vehicle positioning method, which includes steps described below.

An image of surroundings of a vehicle is acquired.

Feature extraction is performed on the image to obtain at least one keypoint in the image and acquire a visual feature descriptor corresponding to each keypoint of the at least one keypoint.

Element recognition is performed on the image to obtain at least one natural positioning element in the image and acquire identification information corresponding to each natural positioning element of the at least one natural positioning element.

The vehicle is positioned based on the visual feature descriptor corresponding to each keypoint and the identification information corresponding to each natural positioning element.

In a second aspect, the present disclosure provides a vehicle positioning apparatus, which includes an image acquisition module, a feature extraction module, an element recognition module and a vehicle positioning module.

The image acquisition module is configured to acquire an image of surroundings of a vehicle.

The feature extraction module is configured to perform feature extraction on the image to obtain at least one keypoint in the image and acquire a visual feature descriptor corresponding to each keypoint of the at least one keypoint.

The element recognition module is configured to perform element recognition on the image to obtain at least one natural positioning element in the image and acquire identification information corresponding to each natural positioning element of the at least one natural positioning element.

The vehicle positioning module is configured to position the vehicle based on the visual feature descriptor corresponding to each keypoint and the identification information corresponding to each natural positioning element.

In a third aspect, an embodiment of the present disclosure provides an electronic device, which includes one or more processors and a memory configured to store one or more programs.

The one or more programs, when executed by the one or more processors, cause the one or more processors to implement the vehicle positioning method according to any embodiment of the present disclosure.

In a fourth aspect, an embodiment of the present disclosure provides a storage medium. The storage medium stores a computer program which, when executed by a processor, implements the vehicle positioning method according to any embodiment of the present disclosure.

In a fifth aspect, a computer program product is provided. The computer program product, when executed by a computer device, implements the vehicle positioning method according to any embodiment of the present disclosure.

According to the technology in the present disclosure, solves the following issues in the related art: an algorithm using a traditional computer visual feature descriptor has a fixed pattern, the calculation amount is relatively large and the capability to match scenarios is relatively poor, low real-time performance or timeliness of a positioning system are easily caused; and a high-precision artificial positioning element has a very high cost for site reconstruction, the detection of positioning elements with a relatively large span has a relatively large error, and a relatively small number of artificial positioning elements, which may lead to an inaccurate positioning result. The technical scheme provided by the present disclosure achieves a more accurate positioning result, has a relatively low difficulty and a relatively low cost, and can be applied to various scenarios without being limited by usage scenarios.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure.
FIG. 1 is a first flowchart of a vehicle positioning method according to an embodiment of the present disclosure.
FIG. 2 is a second flowchart of a vehicle positioning method according to an embodiment of the present disclosure.
FIG. 3 is a third flowchart of a vehicle positioning method according to an embodiment of the present disclosure.
FIG. 4 is a structural diagram of a vehicle positioning apparatus according to an embodiment of the present disclosure.
FIG. 5 is a structural diagram of a vehicle positioning module according to an embodiment of the present disclosure.
FIG. 6 is a block diagram of an electronic device for implementing a vehicle positioning method according to an embodiment of the present disclosure.

### DETAILED DESCRIPTION

A traditional vehicle positioning method has at least the following issues: (1) an algorithm using a traditional computer visual feature descriptor, such as scale-invariant feature transform (SIFT), oriented FAST and rotated BRIEF (ORB), has a fixed pattern, the calculation amount is relatively large and the capability to match scenarios is relatively poor, low real-time performance or timeliness of a positioning system are easily caused; (2) a high-precision artificial positioning element such as Marker is used for matching with a high-precision map to optimize the problem of perspective-n-point (PNP) and obtaining a pose of a vehicle. However, the above manner has a very high cost for site reconstruction, the detection of positioning elements with a relatively large span has a relatively large error, and a relatively small number of artificial positioning elements, which may lead to an inaccurate positioning result.

Exemplary embodiments of the present disclosure, including details of embodiments of the present disclosure, are described hereinafter in conjunction with drawings to facilitate understanding. The example embodiments are merely illustrative. Therefore, it will be appreciated by those of ordinary skill in the art that various changes and modifications may be made to the embodiments described herein without departing from the scope and spirit of the present disclosure. Similarly, the description of well-known functions and constructions is omitted hereinafter for clarity and conciseness.

### Embodiment one

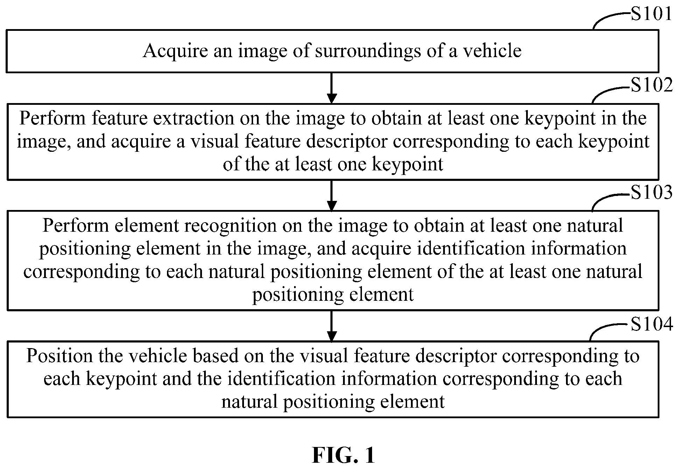

FIG. 1 is a first flowchart of a vehicle positioning method according to an embodiment of the present disclosure. The method may be performed by a vehicle positioning apparatus or an electronic device. The apparatus or the electronic device may be implemented by software and/or hardware and integrated in any intelligent device having a network communication function. As shown in FIG. 1, the vehicle positioning method may include steps described below.

In S101, an image of surroundings of a vehicle is acquired.

In this step, the electronic device may acquire the image of the surroundings of the vehicle. Specifically, in a driving process of the vehicle, the surroundings of the vehicle may be captured by a camera or another image capture device so that the image of the surroundings of the vehicle is obtained. The number of images is not limited in the embodiments of the present disclosure. Only one image or multiple images may be acquired. When multiple images are acquired, the vehicle may be positioned according to each image so that a vehicle positioning result corresponding to each image is obtained, and then a final positioning result is obtained in conjunction with the vehicle positioning result corresponding to each image.

In S102, feature extraction is performed on the image to obtain at least one keypoint in the image and acquire a visual feature descriptor corresponding to each keypoint of the at least one keypoint.

In this step, the electronic device may perform the feature extraction on the image to obtain the at least one keypoint in the image and acquire the visual feature descriptor corresponding to each keypoint of the at least one keypoint. Specifically, the electronic device may extract one keypoint from the at least one keypoint as a current keypoint; obtain, based on a visual feature descriptor corresponding to the current keypoint and a predetermined visual feature descriptor corresponding to each reference point in a descriptor map, a matching result of the current keypoint with the descriptor map; repeatedly perform the above operations until a matching result of each keypoint with the descriptor map is obtained; and obtain, based on the matching result of each keypoint with the descriptor map, a matching result of the at least one keypoint with the descriptor map.

In S103, element recognition is performed on the image to obtain at least one natural positioning element in the image and acquire identification information corresponding to each natural positioning element of the at least one natural positioning element.

In this step, the electronic device may perform the element recognition on the image to obtain the at least one natural positioning element in the image and acquire the identification information corresponding to each natural positioning element of the at least one natural positioning element. Specifically, the electronic device may extract one natural positioning element from the at least one natural positioning element as a current natural positioning element; obtain, based on identification information corresponding to the current natural positioning element and predetermined semantic information corresponding to each reference positioning element in a high-precision map, a matching result of the current natural positioning element with the high-precision map; repeatedly perform the above operations until a matching result of each natural positioning element with the high-precision map is obtained; and obtain, based on the matching result of each natural positioning element with the high-precision map, a matching result of the at least one natural positioning element with the high-precision map.

In S 104, the vehicle is positioned based on the visual feature descriptor corresponding to each keypoint and the identification information corresponding to each natural positioning element.

In this step, the electronic device may position the vehicle based on the visual feature descriptor corresponding to each keypoint and the identification information corresponding to each natural positioning element. Specifically, the electronic device may match, based on the visual feature descriptor corresponding to each keypoint, the at least one keypoint with the pre-constructed descriptor map to obtain the matching result of the at least one keypoint with the descriptor map; match, based on the identification information corresponding to each natural positioning element, the at least one natural positioning element with the pre-constructed high-precision map to obtain the matching result of the at least one natural positioning element with the high-precision map; and position the vehicle based on the matching result of the at least one keypoint with the descriptor map and the matching result of the at least one natural positioning element with the high-precision map.

In the vehicle positioning method provided by the embodiment of the present disclosure, the image of the surroundings of the vehicle is acquired; the feature extraction is performed on the image to obtain the at least one keypoint in the image and acquire the visual feature descriptor corresponding to the each keypoint of the at least one keypoint; at the same time, the element recognition is performed on the image to obtain the at least one natural positioning element in the image and acquire the identification information corresponding to the each natural positioning element of the at least one natural positioning element; and the vehicle is positioned based on the visual feature descriptor corresponding to each keypoint and the identification information corresponding to each natural positioning element. That is, in the present disclosure, a positioning manner based on the visual feature descriptor and a positioning manner based on the natural positioning element may be combined so that the final positioning result of the vehicle is obtained. However, in an existing vehicle positioning method, the positioning is performed depending on only the visual feature descriptor or the positioning is performed depending on only an artificial positioning element, which have the issue of a complex algorithm and a poor capability to match scenarios and the issue of an inaccurate positioning result due to a small number of artificial positioning elements, respectively. In the present disclosure, the positioning manner based on the visual feature descriptor and the positioning manner based on the natural positioning element are combined are combined so that the following issues in the related art can be solved: the positioning manner depending on only the visual feature descriptor has a relatively large calculation amount and a relatively poor capability to match scenarios and easily causes low real-time performance or timeliness of a positioning system; and the positioning manner depending on only the artificial positioning element has a very high cost for site reconstruction, a relatively large error for the detection of positioning elements with a relatively large span, and a relatively small number of artificial positioning elements, leading to an inaccurate positioning result. The technical scheme provided by the present disclosure combines the above two positioning manners instead of entirely depending on any one of the above positioning manners, so that the technical scheme achieves a more accurate positioning result, has a relatively low difficulty and a relatively low cost, and can be applied to various scenarios without being limited by usage scenarios. Moreover, the technical scheme in the embodiment of the present disclosure is simple and convenient to implement, convenient to popularize, and has a wider application range.

### Embodiment two

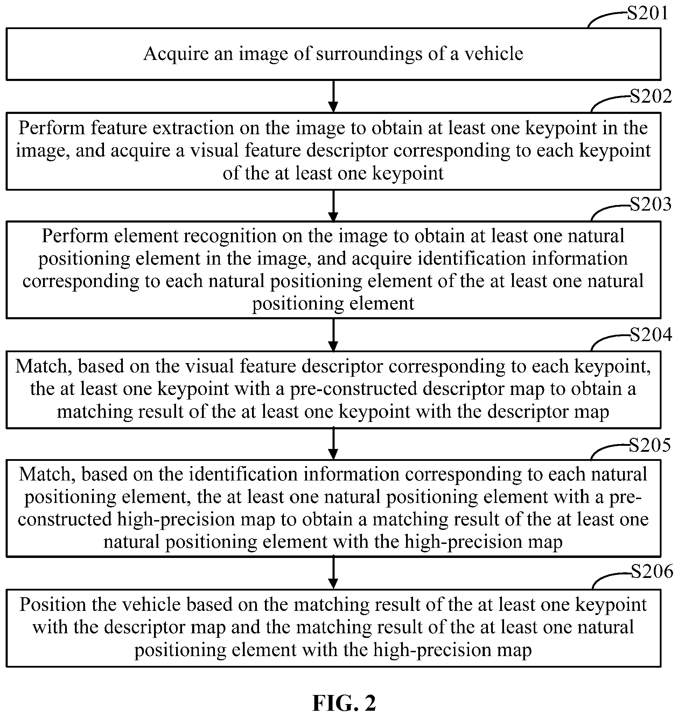

FIG. 2 is a second flowchart of a vehicle positioning method according to an embodiment of the present disclosure. This embodiment is an optimization and expansion of the preceding technical scheme and can be combined with each preceding optional implementation. As shown in FIG. 2, the vehicle positioning method may include steps described below.

In S201, an image of surroundings of a vehicle is acquired.

In S202, feature extraction is performed on the image to obtain at least one keypoint in the image and acquire a visual feature descriptor corresponding to each keypoint of the at least one keypoint.

In S203, element recognition is performed on the image to obtain at least one natural positioning element in the image and acquire identification information corresponding to each natural positioning element of the at least one natural positioning element.

In S204, the at least one keypoint is matched with a pre-constructed descriptor map based on the visual feature descriptor corresponding to each keypoint to obtain a matching result of the at least one keypoint with the descriptor map.

In this step, an electronic device may match, based on the visual feature descriptor corresponding to each keypoint, the at least one keypoint with the pre-constructed descriptor map to obtain the matching result of the at least one keypoint with the descriptor map. Specifically, the electronic device may extract one keypoint from the at least one keypoint as a current keypoint; obtain, based on a visual feature descriptor corresponding to the current keypoint and a predetermined visual feature descriptor corresponding to each reference point in the descriptor map, a matching result of the current keypoint with the descriptor map; repeatedly perform the above operations until a matching result of each keypoint with the descriptor map is obtained; and obtain, based on the matching result of each keypoint with the descriptor map, the matching result of the at least one keypoint with the descriptor map.

In a preferred embodiment of the present disclosure, before the at least one keypoint is matched with the pre-constructed descriptor map, the electronic device may filter out, based on the visual feature descriptor corresponding to each keypoint, a keypoint that does not meet a matching requirement from the at least one keypoint to obtain a remaining keypoint of the at least one keypoint and match the remaining keypoint of the at least one keypoint with the descriptor map. Further, the electronic device may filter predetermined reference points in the descriptor map to obtain the filtered reference point. For example, if it is detected that a certain keypoint is a point on an obstacle, the certain keypoint may be filtered out. A more accurate matching result can be ensured by filtering the descriptor map and the descriptor.

In S205, the at least one natural positioning element is matched with a pre-constructed high-precision map based on the identification information corresponding to each natural positioning element to obtain a matching result of the at least one natural positioning element with the high-precision map.

In this step, the electronic device may match, based on the identification information corresponding to each natural positioning element, the at least one natural positioning element with the pre-constructed high-precision map to obtain the matching result of the at least one natural positioning element with the high-precision map. Specifically, the electronic device may extract one natural positioning element from the at least one natural positioning element as a current natural positioning element; obtain, based on identification information corresponding to the current natural positioning element and predetermined semantic information corresponding to each reference positioning element in the high-precision map, a matching result of the current natural positioning element with the high-precision map; repeatedly perform the above operations until a matching result of each natural positioning element with the high-precision map is obtained; and obtain, based on the matching result of each natural positioning element with the high-precision map, the matching result of the at least one natural positioning element with the high-precision map.

In S206, the vehicle is positioned based on the matching result of the at least one keypoint with the descriptor map and the matching result of the at least one natural positioning element with the high-precision map.

In this step, the electronic device may position the vehicle based on the matching result of the at least one keypoint with the descriptor map and the matching result of the at least one natural positioning element with the high-precision map. Specifically, the electronic device may obtain, based on the matching result of the at least one keypoint with the descriptor map, an original positioning result of the vehicle and correct the original positioning result of the vehicle using the matching result of the at least one natural positioning element with the high-precision map to obtain a target positioning result of the vehicle.

In the vehicle positioning method provided by the embodiment of the present disclosure, the image of the surroundings of the vehicle is acquired; the feature extraction is performed on the image to obtain the at least one keypoint in the image and acquire the visual feature descriptor corresponding to the each keypoint of the at least one keypoint; at the same time, the element recognition is performed on the image to obtain the at least one natural positioning element in the image and acquire the identification information corresponding to each natural positioning element of the at least one natural positioning element; and the vehicle is positioned based on the visual feature descriptor corresponding to each keypoint and the identification information corresponding to each natural positioning element. That is, in the present disclosure, a positioning manner based on the visual feature descriptor and a positioning manner based on the natural positioning element may be combined so that the final positioning result of the vehicle is obtained. However, in an existing vehicle positioning method, the positioning is performed depending on only a visual feature descriptor or the positioning is performed depending on only an artificial positioning element, which have the issue of a complex algorithm and a poor capability to match scenarios and the issue of an inaccurate positioning result due to a small number of artificial positioning elements, respectively. In the present disclosure, the positioning manner based on the visual feature descriptor and the positioning manner based on the natural positioning element are combined so that the following issues in the related art can be solved: the positioning manner depending on only the visual feature descriptor has a relatively large calculation amount and a relatively poor capability to match scenarios and easily causes low real-time performance or timeliness of a positioning system; and the positioning manner depending on only the artificial positioning element has a very high cost for site reconstruction, a relatively large error for the detection of positioning elements with a relatively large span, and a relatively small number of artificial positioning elements, leading to an inaccurate positioning result. The technical scheme provided by the present disclosure combines the above two positioning manners instead of entirely depending on any one of the above positioning manners, so that the technical scheme achieves a more accurate positioning result, has a relatively low difficulty and a relatively low cost, and can be applied to various scenarios without being limited by usage scenarios. Moreover, the technical scheme in the embodiment of the present disclosure is simple and convenient to implement, convenient to popularize, and has a wider application range.

### Embodiment three

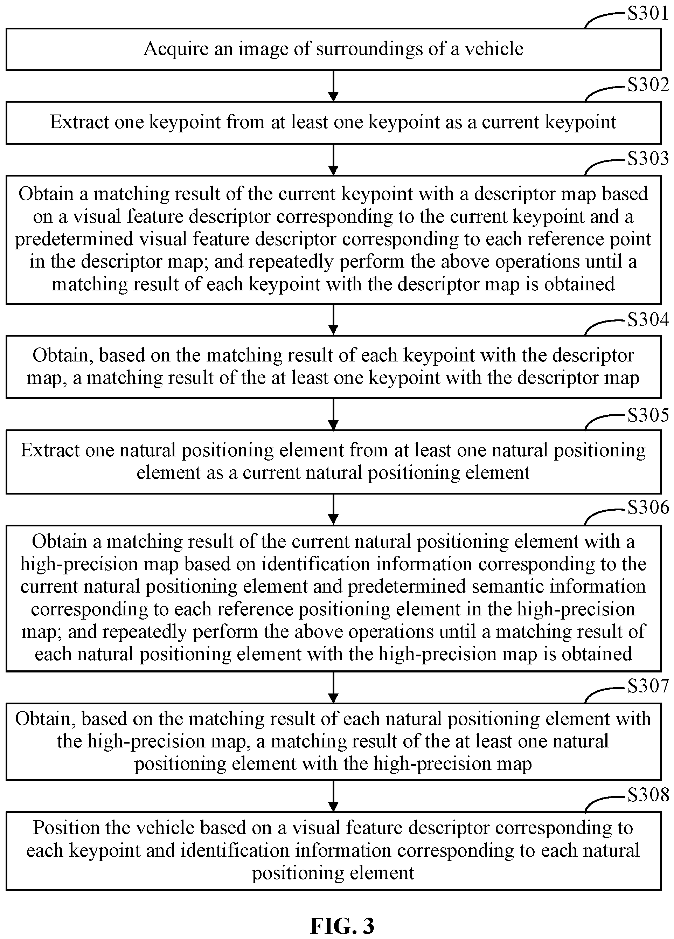

FIG. 3 is a third flowchart of a vehicle positioning method according to an embodiment of the present disclosure. This embodiment is an optimization and expansion of the preceding technical scheme and can be combined with each preceding optional implementation. As shown in FIG. 3, the vehicle positioning method may include steps described below.

In S301, an image of surroundings of a vehicle is acquired.

In S302, one keypoint is extracted from at least one keypoint as a current keypoint.

In this step, an electronic device may extract one keypoint from the at least one keypoint as the current keypoint. Specifically, the electronic device may randomly extract one keypoint from the at least one keypoint as the current keypoint.

In S303, a matching result of the current keypoint with a descriptor map is obtained based on a visual feature descriptor corresponding to the current keypoint and a predetermined visual feature descriptor corresponding to each reference point in the descriptor map; and the above operations are repeatedly performed until a matching result of each keypoint with the descriptor map is obtained.

In this step, the electronic device may obtain, based on the visual feature descriptor corresponding to the current keypoint and the predetermined visual feature descriptor corresponding to each reference point in the descriptor map, the matching result of the current keypoint with the descriptor map and repeatedly perform the above operations until the matching result of each keypoint with the descriptor map is obtained. Specifically, the electronic device may calculate, based on the visual feature descriptor corresponding to the current keypoint and the predetermined visual feature descriptor corresponding to each reference point in the descriptor map, a matching degree between the current keypoint and each reference point in the descriptor map and obtain, based on the matching degree between the current keypoint and each reference point in the descriptor map, the matching result of the current keypoint with the descriptor map.

In S304, a matching result of the at least one keypoint with the descriptor map is obtained based on the matching result of each keypoint with the descriptor map.

In this step, the electronic device may obtain, based on the matching result of each keypoint with the descriptor map, the matching result of the at least one keypoint with the descriptor map. Specifically, the electronic device may input the matching result of each keypoint with the descriptor map into a pre-trained matching model and obtain the matching result of the at least one keypoint with the descriptor map through the matching model.

In S305, one natural positioning element is extracted from at least one natural positioning element as a current natural positioning element.

In this step, the electronic device may extract one natural positioning element from the at least one natural positioning element as the current natural positioning element. Specifically, the electronic device may randomly extract one natural positioning element from the at least one natural positioning element as the current natural positioning element.

In S306, a matching result of the current natural positioning element with a high-precision map is obtained based on identification information corresponding to the current natural positioning element and predetermined semantic information corresponding to each reference positioning element in the high-precision map; and the above operations are repeatedly performed until a matching result of each natural positioning element with the high-precision map is obtained.

In this step, the electronic device may obtain, based on the identification information corresponding to the current natural positioning element and the predetermined semantic information corresponding to each reference positioning element in the high-precision map, the matching result of the current natural positioning element with the high-precision map and repeatedly performed the above operations until the matching result of each natural positioning element with the high-precision map is obtained. Specifically, the electronic device may calculate, based on the identification information corresponding to the current natural positioning element and the predetermined semantic information corresponding to each reference positioning element in the high-precision map, a matching degree between the current natural positioning element and each reference positioning element in the high-precision map and obtain, based on the matching degree between the current natural positioning element and each reference positioning element in the high-precision map, the matching result of the current natural positioning element with the high-precision map.

In S307, a matching result of the at least one natural positioning element with the high-precision map is obtained based on the matching result of each natural positioning element with the high-precision map.

In this step, the electronic device may obtain, based on the matching result of each natural positioning element with the high-precision map, the matching result of the at least one natural positioning element with the high-precision map. Specifically, the electronic device may input the matching result of each natural positioning element with the high-precision map into a pre-trained matching model and obtain the matching result of the at least one natural positioning element with the high-precision map through the matching model.

In S308, the vehicle is positioned based on a visual feature descriptor corresponding to each keypoint and identification information corresponding to each natural positioning element.

In the vehicle positioning method provided by the embodiment of the present disclosure, the image of the surroundings of the vehicle is acquired; the feature extraction is performed on the image to obtain the at least one keypoint in the image and acquire the visual feature descriptor corresponding to each keypoint of the at least one keypoint; at the same time, the element recognition is performed on the image to obtain the at least one natural positioning element in the image and acquire the identification information corresponding to the each natural positioning element of the at least one natural positioning element; and the vehicle is positioned based on the visual feature descriptor corresponding to each keypoint and the identification information corresponding to each natural positioning element. That is, in the present disclosure, a positioning manner based on the visual feature descriptor and a positioning manner based on the natural positioning element may be combined so that the final positioning result of the vehicle is obtained. However, in an existing vehicle positioning method, the positioning is performed depending on only a visual feature descriptor or the positioning is performed depending on only an artificial positioning element, which have the issue of a complex algorithm and a poor capability to match scenarios and the issue of an inaccurate positioning result due to a small number of artificial positioning elements, respectively. In the present disclosure, the positioning manner based on the visual feature descriptor and the positioning manner based on the natural positioning element are combined so that the following issues in the related art are solved: the positioning manner depending on only the visual feature descriptor has a relatively large calculation amount and a relatively poor capability to match scenarios and easily causes low real-time performance or timeliness of a positioning system; and the positioning manner depending on only the artificial positioning element has a very high cost for site reconstruction, a relatively large error for the detection of positioning elements with a relatively large span, and a relatively small number of artificial positioning elements, leading to an inaccurate positioning result. The technical scheme provided by the present disclosure combines the above two positioning manners instead of entirely depending on any one of the above positioning manners, so that the technical scheme achieves a more accurate positioning result, has a relatively low difficulty and a relatively low cost, and can be applied to various scenarios without being limited by usage scenarios. Moreover, the technical scheme in the embodiment of the present disclosure is simple and convenient to implement, convenient to popularize, and has a wider application range.

### Embodiment four

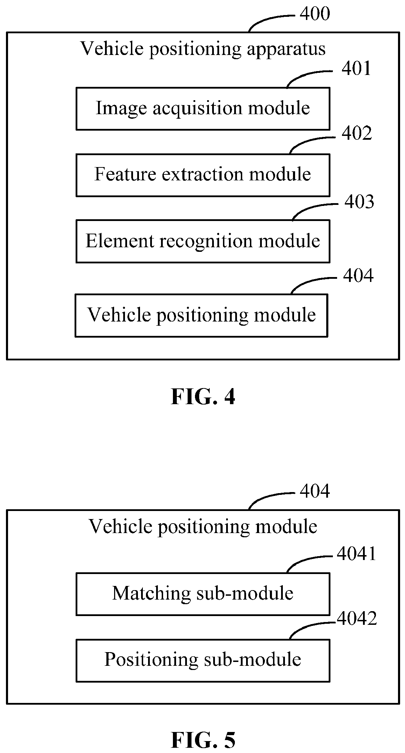

FIG. 4 is a structure diagram of a vehicle positioning apparatus according to an embodiment of the present disclosure. As shown in FIG. 4, an apparatus 400 includes an image acquisition module 401, a feature extraction module 402, an element recognition module 403 and a vehicle positioning module 404.

The image acquisition module 401 is configured to acquire an image of surroundings of a vehicle.

The feature extraction module 402 is configured to perform feature extraction on the image to obtain at least one keypoint in the image and acquire a visual feature descriptor corresponding to each keypoint of the at least one keypoint.

The element recognition module 403 is configured to perform element recognition on the image to obtain at least one natural positioning element in the image and acquire identification information corresponding to each natural positioning element of the at least one natural positioning element.

The vehicle positioning module 404 is configured to position the vehicle based on the visual feature descriptor corresponding to each keypoint and the identification information corresponding to each natural positioning element.

FIG. 5 is a structure diagram of a vehicle positioning module according to an embodiment of the present disclosure. As shown in FIG. 5, the vehicle positioning module 404 includes a matching sub-module 4041 and a positioning sub-module 4042.

The matching sub-module 4041 is configured to match, based on the visual feature descriptor corresponding to each keypoint, the at least one keypoint with a pre-constructed descriptor map to obtain a matching result of the at least one keypoint with the descriptor map and match, based on the identification information corresponding to each natural positioning element, the at least one natural positioning element with a pre-constructed high-precision map to obtain a matching result of the at least one natural positioning element with the high-precision map.

The positioning sub-module 4042 is configured to position the vehicle based on the matching result of the at least one keypoint with the descriptor map and the matching result of the at least one natural positioning element with the high-precision map.

Further, the matching sub-module 4041 is configured to extract one keypoint from the at least one keypoint as a current keypoint; obtain, based on a visual feature descriptor corresponding to the current keypoint and a predetermined visual feature descriptor corresponding to each reference point in the descriptor map, a matching result of the current keypoint with the descriptor map; repeatedly perform the above operations until a matching result of each keypoint with the descriptor map is obtained; and obtain, based on the matching result of each keypoint with the descriptor map, the matching result of the at least one keypoint with the descriptor map.

Further, the matching sub-module 4041 is configured to extract one natural positioning element from the at least one natural positioning element as a current natural positioning element.

The matching sub-module 4041 is also configured to obtain, based on identification information corresponding to the current natural positioning element and predetermined semantic information corresponding to each reference positioning element in the high-precision map, a matching result of the current natural positioning element with the high-precision map; repeatedly perform the above operations until a matching result of each natural positioning element with the high-precision map is obtained; and obtain, based on the matching result of the each natural positioning element with the high-precision map, the matching result of the at least one natural positioning element with the high-precision map.

Further, the matching sub-module 4041 is further configured to filter out, based on the visual feature descriptor corresponding to each keypoint, a keypoint that does not meet a matching requirement from the at least one keypoint to obtain a remaining keypoint of the at least one keypoint and match the remaining keypoint of the at least one keypoint with the descriptor map.

Further, the positioning sub-module 4042 is configured to obtain, based on the matching result of the at least one keypoint with the descriptor map, an original positioning result of the vehicle and correct the original positioning result of the vehicle using the matching result of the at least one natural positioning element with the high-precision map to obtain a target positioning result of the vehicle.

The above vehicle positioning apparatus may perform the method provided by any embodiment of the present disclosure and has function modules and beneficial effects corresponding to the performed method. For technical details not described in detail in this embodiment, reference may be made to the vehicle positioning method provided by any embodiment of the present disclosure.

In the technical schemes of the present disclosure, acquisition, storage and application of user personal information involved are in compliance with relevant laws and regulations and do not violate the public order and good customs.

### Embodiment five

According to embodiments of the present disclosure, the present disclosure further provides an electronic device, a readable storage medium and a computer program product.

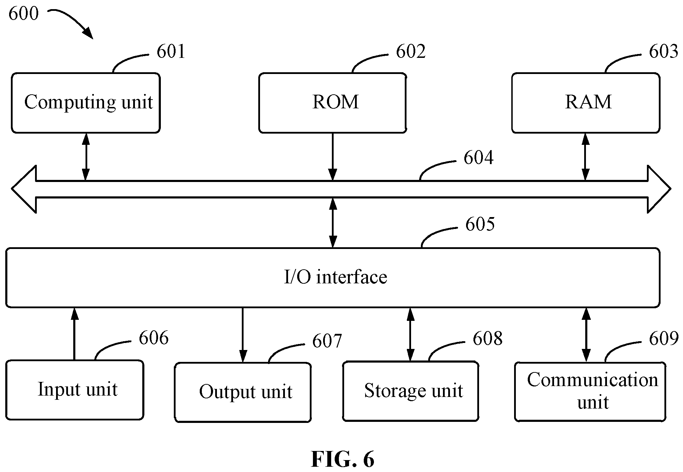

FIG. 6 is an illustrative block diagram of an exemplary electronic device 600 that may be configured to implement embodiments of the present disclosure. Electronic devices are intended to represent various forms of digital computers, for example, laptop computers, desktop computers, worktables, personal digital assistants, servers, blade servers, mainframe computers and other applicable computers. Electronic devices may further represent various forms of mobile apparatuses, for example, personal digital assistants, cellphones, smartphones, wearable devices and other similar computing apparatuses. Herein the shown components, the connections and relationships between these components, and the functions of these components are illustrative only and are not intended to limit the implementation of the present disclosure as described and/or claimed herein.

As shown in FIG. 6, the device 600 includes a computing unit 601. The computing unit 601 may perform various types of appropriate operations and processing based on a computer program stored in a read-only memory (ROM) 602 or a computer program loaded from a storage unit 608 to a random-access memory (RAM) 603. Various programs and data required for operations of the device 600 may also be stored in the RAM 603. The computing unit 601, the ROM 602 and the RAM 603 are connected to each other through a bus 604. An input/output (I/O) interface 605 is also connected to the bus 604.

Multiple components in the device 600 are connected to the I/O interface 605. The components include an input unit 606 such as a keyboard and a mouse, an output unit 607 such as various types of displays and speakers, the storage unit 608 such as a magnetic disk and an optical disk, and a communication unit 609 such as a network card, a modem and a wireless communication transceiver. The communication unit 609 allows the device 600 to exchange information/data with other devices over a computer network such as the Internet and/or various telecommunication networks.

The computing unit 601 may be various general-purpose and/or dedicated processing components having processing and computing capabilities. Some examples of the computing unit 601 include, but are not limited to, central processing units (CPUs), graphics processing units (GPUs), various specialized artificial intelligence (AI) computing chips, various computing units running machine learning models and algorithms, digital signal processors (DSPs), and any suitable processors, controllers, microcontrollers. The calculation unit 601 performs various methods and processing described above, such as the vehicle positioning method. For example, in some embodiments, the vehicle positioning method may be implemented as a computer software program tangibly contained in a machine-readable medium, for example, the storage unit 608. In some embodiments, part or all of the computer program may be loaded and/or installed on the device 600 via the ROM 602 and/or the communication unit 609. When the computer program is loaded into the RAM 603 and executed by the computing unit 601, one or more steps of the vehicle positioning method can be performed. Alternatively, in other embodiments, the computing unit 601 may be configured to perform the vehicle positioning method in any other appropriate manner (for example, by use of firmware).

Herein various embodiments of the systems and technologies described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

Program codes for implementing the methods of the present disclosure may be compiled in any combination of one or more programming languages. The program codes may be provided for the processor or controller of a general-purpose computer, a special-purpose computer or another programmable data processing apparatus to enable functions/operations specified in a flowchart and/or a block diagram to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, the machine-readable medium may be a tangible medium that may include or store a program that is used by or in conjunction with a system, apparatus or device that executes instructions. The machine-readable medium may be a machine-readable signal medium or a machine-readable storage medium. The machine-readable medium may include, but is not limited to, an electronic, magnetic, optical, electromagnetic, infrared or semiconductor system, apparatus or device or any appropriate combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device or any suitable combination thereof.

In order that interaction with a user is provided, the systems and techniques described herein may be implemented on a computer. The computer has a display device (for example, a cathode-ray tube (CRT) or a liquid-crystal display (LCD) monitor) for displaying information to the user and a keyboard and a pointing device (for example, a mouse or a trackball) through which the user can provide input to the computer. Other types of apparatuses may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN) and the Internet.

The computing system may include clients and servers. The clients and the servers are usually far away from each other and generally interact through the communication network. The relationship between the client and the server arises by virtue of computer programs running on respective computers and having a client-server relationship to each other. The server may be a cloud server, a server of a distributed system or a server combined with a blockchain.

It is to be understood that various forms of the preceding flows may be used, with steps reordered, added or removed. For example, the steps described in the present disclosure may be executed in parallel, in sequence or in a different order as long as the desired result of the technical solutions disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure are within the scope of the present disclosure.

## Claims

1. A vehicle positioning method, comprising:
acquiring an image of surroundings of a vehicle;
performing feature extraction on the image to obtain at least one keypoint in the image and acquiring a visual feature descriptor corresponding to each keypoint of the at least one keypoint;
performing element recognition on the image to obtain at least one natural positioning element in the image and acquiring identification information corresponding to each natural positioning element of the at least one natural positioning element; and
positioning the vehicle based on the visual feature descriptor corresponding to each keypoint and the identification information corresponding to each natural positioning element.

2. The method according to claim 1, wherein positioning the vehicle based on the visual feature descriptor corresponding to the each keypoint and the identification information corresponding to the each natural positioning element comprises:
matching, based on the visual feature descriptor corresponding to each keypoint, the at least one keypoint with a pre-constructed descriptor map to obtain a matching result of the at least one keypoint with the descriptor map;
matching, based on the identification information corresponding to each natural positioning element, the at least one natural positioning element with a pre-constructed high-precision map to obtain a matching result of the at least one natural positioning element with the high-precision map; and
positioning the vehicle based on the matching result of the at least one keypoint with the descriptor map and the matching result of the at least one natural positioning element with the high-precision map.

3. The method according to claim 2, wherein matching, based on the visual feature descriptor corresponding to the each keypoint, the at least one keypoint with the pre-constructed descriptor map to obtain the matching result of the at least one keypoint with the descriptor map comprises:
extracting one keypoint from the at least one keypoint as a current keypoint;
obtaining, based on a visual feature descriptor corresponding to the current keypoint and a predetermined visual feature descriptor corresponding to each of reference points in the descriptor map, a matching result of the current keypoint with the descriptor map; and repeatedly performing the above operations until a matching result of each keypoint with the descriptor map is obtained; and
obtaining, based on the matching result of each keypoint with the descriptor map, the matching result of the at least one keypoint with the descriptor map.

4. The method according to claim 2, wherein matching, based on the identification information corresponding to the each natural positioning element, the at least one natural positioning element with the pre-constructed high-precision map to obtain the matching result of the at least one natural positioning element with the high-precision map comprises:
extracting one natural positioning element from the at least one natural positioning element as a current natural positioning element;
obtaining, based on identification information corresponding to the current natural positioning element and predetermined semantic information corresponding to each of reference positioning elements in the high-precision map, a matching result of the current natural positioning element with the high-precision map; and repeatedly performing the above operations until a matching result of each natural positioning element with the high-precision map is obtained; and
obtaining, based on the matching result of each natural positioning element with the high-precision map, the matching result of the at least one natural positioning element with the high-precision map.

5. The method according to claim 2, further comprising:
filtering out, based on the visual feature descriptor corresponding to each keypoint, a keypoint that does not meet a matching requirement from the at least one keypoint to obtain a remaining keypoint of the at least one keypoint; and matching the remaining keypoint of the at least one keypoint with the descriptor map.

6. The method according to claim 2, wherein positioning the vehicle based on the matching result of the at least one keypoint with the descriptor map and the matching result of the at least one natural positioning element with the high-precision map comprises:
obtaining, based on the matching result of the at least one keypoint with the descriptor map, an original positioning result of the vehicle; and
correcting the original positioning result of the vehicle using the matching result of the at least one natural positioning element with the high-precision map to obtain a target positioning result of the vehicle.

7. A vehicle positioning apparatus, comprising an image acquisition module, a feature extraction module, an element recognition module and a vehicle positioning module; wherein
the image acquisition module is configured to acquire an image of surroundings of a vehicle;
the feature extraction module is configured to perform feature extraction on the image to obtain at least one keypoint in the image and acquire a visual feature descriptor corresponding to each keypoint of the at least one keypoint;
the element recognition module is configured to perform element recognition on the image to obtain at least one natural positioning element in the image and acquire identification information corresponding to each natural positioning element of the at least one natural positioning element; and
the vehicle positioning module is configured to position the vehicle based on the visual feature descriptor corresponding to each keypoint and the identification information corresponding to each natural positioning element.

8. The apparatus according to claim 7, wherein the vehicle positioning module comprises a matching sub-module and a positioning sub-module; wherein
the matching sub-module is configured to match, based on the visual feature descriptor corresponding to each keypoint, the at least one keypoint with a pre-constructed descriptor map to obtain a matching result of the at least one keypoint with the descriptor map and match, based on the identification information corresponding to each natural positioning element, the at least one natural positioning element with a pre-constructed high-precision map to obtain a matching result of the at least one natural positioning element with the high-precision map; and
the positioning sub-module is configured to position the vehicle based on the matching result of the at least one keypoint with the descriptor map and the matching result of the at least one natural positioning element with the high-precision map.

9. The apparatus according to claim 8, wherein the matching sub-module is configured to: extract one keypoint from the at least one keypoint as a current keypoint; obtain, based on a visual feature descriptor corresponding to the current keypoint and a predetermined visual feature descriptor corresponding to each of reference points in the descriptor map, a matching result of the current keypoint with the descriptor map; repeatedly perform the above operations until a matching result of each keypoint with the descriptor map is obtained; and obtain, based on the matching result of each keypoint with the descriptor map, the matching result of the at least one keypoint with the descriptor map.

10. The apparatus according to claim 8, wherein the matching sub-module is configured to: extract one natural positioning element from the at least one natural positioning element as a current natural positioning element;
obtain, based on identification information corresponding to the current natural positioning element and predetermined semantic information corresponding to each of reference positioning elements in the high-precision map, a matching result of the current natural positioning element with the high-precision map; repeatedly perform the above operations until a matching result of each natural positioning element with the high-precision map is obtained; and obtain, based on the matching result of each natural positioning element with the high-precision map, the matching result of the at least one natural positioning element with the high-precision map.

11. The apparatus according to claim 8, wherein the matching sub-module is further configured to filter out, based on the visual feature descriptor corresponding to each keypoint, a keypoint that does not meet a matching requirement from the at least one keypoint to obtain a remaining keypoint of the at least one keypoint; and match the remaining keypoint of the at least one keypoint with the descriptor map.

12. The apparatus according to claim 8, wherein the positioning sub-module is configured to obtain, based on the matching result of the at least one keypoint with the descriptor map, an original positioning result of the vehicle and correct the original positioning result of the vehicle using the matching result of the at least one natural positioning element with the high-precision map to obtain a target positioning result of the vehicle.

13. An electronic device, comprising:
at least one processor; and
a memory communicatively connected to the at least one processor, wherein
the memory stores an instruction executable by the at least one processor, and the instruction is executed by the at least one processor to cause the at least one processor to perform the method according to any one of claims 1 to 6.

14. A non-transitory computer-readable storage medium storing a computer instruction, wherein the computer instruction is configured to cause a computer to perform the method according to any one of claims 1 to 6.

15. A computer program product, comprising a computer program which, when executed by a processor, implements the method according to any one of claims 1 to 6.
